# EUROPEAN PATENT APPLICATION

(11) **EP 1 529 760 A1**
(43) Date of publication of application: **11.05.2005**
(21) Application number: 04026237.0
(22) Date of filing: 05.11.2004
(51) Int. Cl.: C03B 37/095

(54) **Cooling members for fiberizing bushings and method**

(30) Priority: 05.11.2003 US 702004
(71) Applicant: Johns Manville International, Inc., Denver, Colorado 80202 (US)
(72) Inventor: Johnson, Walter A., Centennial, Colorado 80015 (US)
(74) Representative: Luderschmidt, Schüler & Partner

(57) **Abstract**

This invention involves apparatus and methods for making fibers by passing a molten material like glass, polymer, etc. through orifices or tips in a fiberizing bushing and then cooling the molten material coming from the tips and newly formed fibers with a cooling apparatus. The cooling apparatus is made from a metal to withstand the environment close beneath a fiberizing bushing and to provide the needed thermal conductivity to carry heat away rapidly. Alloys comprising nickel and titanium and that are in a martensite structure below about 93,3°C (200 degrees F). are used for at least parts of the cooling apparatus to reduce cost and/or provide for improved life and cooling performance and/or to improve fiberizing efficiency.

## Description

The present invention involves fluid cooled, directly or indirectly, parts for fiberizing bushings such as cooling tubes that cool the tips that form fibers from a molten material, the meniscus at the end of each tip and the fibers as they emerge from the meniscus. The present invention also includes fluid-cooled, directly or indirectly, parts for fiberizing bushings that do not have fiber forming tips, but that form fibers under an orifice plate and the method of using these cooling parts.

In the manufacture of continuous fibers from a molten material like molten glass, the molten material is often generated by a tank furnace and distributed to a plurality of fiberizing bushings via one or more channels and into one or more bushing legs connected to the channel(s). Each bushing leg comes off the channel at about 90 degrees and contains a plurality of spaced apart orifices in the bottom to supply bushings that are mounted to the underneath side of each leg.

Precious metal bushings made from alloys of platinum and rhodium and used for making continuous glass fibers are well known, having been in use for more than 50 years. Many types of bushings exist for converting molten glass into continuous glass fiber and products. Typical types of bushings are shown in U. S. Patent Nos. 3,512,948, 4,155,732, 4,272,271 and 4,285,712, the disclosures of which are hereby incorporated by reference. All the bushings shown in these patents teach the use of a perforated plate or screen, welded to the end walls and sidewalls at some distance above a tip plate containing hundreds or thousands of nozzles or tips where molten glass first emerges from the bushing and is converted to continuous glass fibers by cooling and drawing, attenuating, in a known manner.

It is typical to use cooling tubes, with or without one or more short fins attached, suspended below the tip plate and located close to the tips to cool the molten tips and the molten glass as it emerges from the tips and as the molten glass is attenuated or drawn into fibers of desired diameter. Some previous patents which show cooling tubes are U.S. Patent Nos. 4,337,075, 4,397,665, and 5,244,483, the disclosure of which is incorporated herein by reference. During operation cooling water flows through the cooling tubes to carry away heat absorbed by the cooling tubes. It is also known to use solid and/or hollow cooling fins and other cooling apparatus below the tip plate to remove heat from below the tip plate as shown in U.S. Patent Nos. 3,264,076, 3,708,271, 3,746,525, 4,824,457, 5,693,118, 5,925,164, 6,192,714, and 6,408,654, the disclosures of which are incorporated herein by reference.

The outer surface of the cooling tubes and/or fins are subjected to very corrosive conditions of high temperature, oxidizing conditions, corrosive vapors coming off of the molten glass and a water or high humidity. While nickel has been used, experience has been an unacceptable short service life, particularly where the containment of cooling fluid is involved. Nickel and copper also oxidize excessively on the exposed surface that reduces their thermal conductivity. Copper suffers catastrophic failure when cooling fluid is lost for a period of time that can happen when power is lost for a period of time. To achieve practical life and good fiberizing performance, it has been ordinary practice to use precious metals and precious metal alloys for cooling tubes. It has been preferred to use a precious metal or a precious metal alloy of platinum, rhodium, palladium, etc. that can be bent fairly easily while mounted in place to allow appropriate location adjustment as the tip plate and tips deform significantly during service, usually more in some parts of the tip plate than other parts.

As disclosed in U.S. Patent No. 4,397,665, it is known to make cooling tubes by cladding a base metal with a layer of platinum, palladium, rhodium, iridium, gold, silver or alloys thereof, but this technique proved to be too expensive. Any flaw in the cladding resulted in premature failure and the failures added further costs. Alloys of platinum and rhodium were used for many years to make cooling tubes, but rhodium became extremely expensive. Palladium was tried alone, but it proved too soft and the tubes were too easily damaged during routine maintenance and operation of the bushing.

U.S. Patent No. 5,749,933 discloses using an alloy of palladium containing a small percentage of ruthenium to reduce the investment, but this alloy was more rigid than desired. This patent taught that alloys of palladium containing small amounts of iridium or nickel produced more desirable cooling tubes. While these alloys are much less expensive than platinum and rhodium, they are still very expensive compared to non-precious metal alloys and it is still desirable to find a way to reduce the large investment in precious metals required to manufacture long glass fibers.

### Summary of the Invention

The present invention comprises using alloys containing nickel and titanium to make metallic external supports and/or cooling members like cooling tubes, cooling fins connected to heat sinks like cooling fluid manifolds or cooling tubes, cooling manifolds, cooling rings and hollow cooling fins used with fiberizing bushings to make fibers like glass fibers, glassy material fibers and polymer fibers. The invention also includes these metallic cooling members items, and the use of these metallic cooling members in the manufacture of glass fibers and fibers of any other material which requires cooling during the process of forming fibers from the material that is in molten or thermally-softened condition during formation of the fiber.

The present invention provides a cooling apparatus mounted close to a fiberizing bushing comprising a metal member for cooling one or more items selected from a group consisting of tips of the fiberizing bushing, molten material flowing out of the tips, and fibers formed from the molten material, the metal member comprising an alloy of nickel and titanium, the alloy being in a martensite phase below about 93,3°C (200 degrees F).

According to a preferred aspect, the present invention provides a cooling apparatus mounted close to a fiberizing bushing comprising a metal member for cooling one or more items selected from a group consisting of tips of the fiberizing bushing, molten material flowing out of the tips, and fibers formed from the molten material, the metal member comprising an alloy of nickel and titanium, the alloy being in a martensite phase below about 93,3°C (200 degrees F)., the nickel plus titanium content of the alloy amounting to at least about 98 weight percent.

According to another preferred aspect, the present invention provides a cooling apparatus mounted close to a fiberizing bushing comprising a metal member for cooling one or more items selected from a group consisting of tips of the fiberizing bushing, molten material flowing out of the tips, and fibers formed from the molten material, the metal member comprising an alloy of nickel and titanium, the alloy being in a martensite phase below about 93,3°C (200 degrees F)., the nickel plus titanium content of the alloy amounting to at least about 98 weight percent 21, the nickel content of the alloy being in the range of about 55 to about 56 weight percent.

The nickel-titanium alloys used in this invention contain substantial percentages of nickel and titanium and can contain other materials in small amounts. The compositions of these alloys remain in a martensite crystal structure or phase from room temperature to about 93,3°C (200 degrees F). Preferably, these alloys are equi-atomic intermetallic alloys that readily form two phases at elevated temperatures above about 93,3°C (200 degrees F)., an ordered austenitic phase and a lower temperature martensitic phase. The alloys used in the present invention, if overheated and converted to a harder, more rigid phase, quickly revert to the martensite phase when cooled back below 93,3°C (200 degrees F). Preferably, these alloys are sufficiently malleable to be bent easily to adjust the metallic cooling members as a tip plate or orifice plate of the bushing sags yet sufficiently rigid to avoid damage during routine operation and maintenance of the bushing. Preferably, the nickel-titanium alloys used in the present invention have low elastic modulus and low yield strength in the fully annealed condition. Some of the Ni-Ti alloys of interest here have a yield strength in the range of 3,000-5,000 psi (204-340 bar) and an elastic modulus of 2-5 million psi (13600-34000 bar). These are alloys that are easy to deform and will readily take on a permanent plastic set. These alloys are very desirable for this application. The cost of these alloys is far less than that of precious metal alloys currently being used and far superior to the copper, nickel or nickel and copper alloys currently used in fin-shield type cooling members, both solid and hollow. Preferably, the alloys used in this invention are oxidation resistant up to about 427°C (800 degrees F). and form a corrosion resistant oxide film that tenaciously bonds to the Ni-Ti alloy and protects the alloy up to about 816°C (1500 degrees F). The alloys used in this invention begin to deteriorate and spall above 816°C (1500 degrees F).

One family of alloys meeting the above description that are used in the present invention is called NITINOL®, such as 55 NITINOL®, available from the Timet Division of the Titanium Corporation of America located in Toronto, OH. Preferably, this alloy has a composition of about 55 percent nickel, about 45 percent of titanium and minor amounts of iron and nitrogen.

Another family of Ni-Ti alloys for use in the present invention are known as types S, N, C, B, M, and H. Preferably, these alloys have a nickel content in the range of about 55 and 56 wt. percent, and usually the balance, except for trace amounts, being titanium. Chromium can be present in amounts less than about 0.3 wt. percent. Other similar nickel-titanium alloys are suitable for use in the present invention.

### BRIEF DESCRIPTION OF DRAWINGS

Figure 1 is a crossectional perspective view along the length of a conventional fiberizing bushing showing a tip plate, tips, and cooling tubes with fins attached.
Figure 2 is a side view of a typical cooling tube with a fin attached made according to the present invention.
Figures 2A-2D are crossections of some optional cooling tube shapes.
Figure 3 is a partial cross-sectional view along the length of a conventional fin shield fiberizing bushing showing cooling fins of the present invention attached to a fluid cooled heat sink manifold which can also be made according to the present invention.
Figure 4 is a partial crossectional view along the length of a fin shield fiberizing bushing with hollow cooling fins made according to the present invention attached to a fluid manifold which can also be made according to the present invention.
Figure 5 is a partial perspective view of a cooling apparatus that can be made according to the present invention for mounting beneath the tip plate of a conventional fiberizing bushing.

### DETAILS

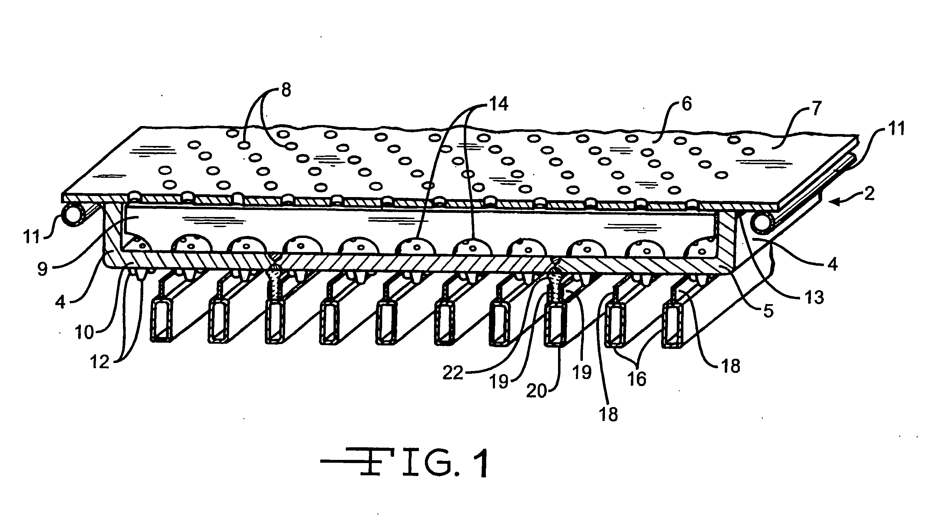

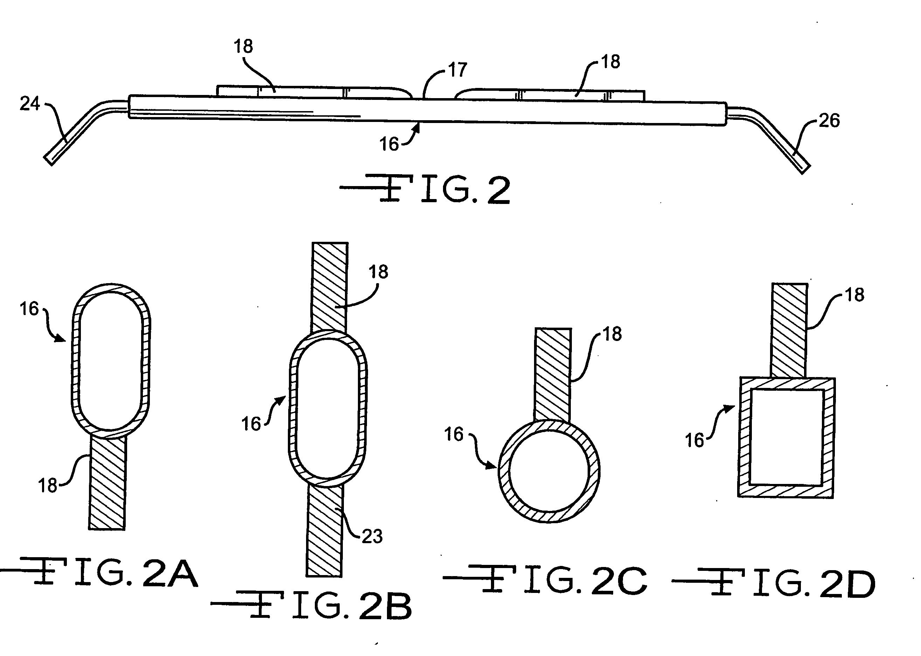

Precious metal bushings are used to make fibers from molten materials like glass, polymers, and glassy materials. A cooling tube type bushing 2 is partially shown in Figure 1, a perspective cross-section through the length. The bushing 2 is made from a platinum/rhodium alloy having a rhodium content ranging from 10 to about 30 percent, typically 15-25 percent. The bushing 2 comprises two sidewalls 4 (see Fig. 2), a perforated plate and flange 6. The flange portion 7 of the perforated plate and flange 6 projects beyond the sidewalls 4 and end walls (not shown) and extends around the entire upper periphery of the sidewalls 4 and end walls. The perforated plate portion of the perforated plate and flange 6 has holes 8 therethrough to allow molten glass to pass through. The perforated plate and flange 6 is welded to the upper edges of the sidewalls 4 and the upper edges of the two end walls with weld 13. Cooling ring 11 is mounted under the flange portion 7 as is well known.

A plurality of hollow nozzles or tips 12 are formed in or welded to a tip or orifice plate 10 in or around orifices. Normally, the tips 12 are arranged in rows down the length or along the width of the bushing 2. In the bushing 2, the tips 12 are preferably arranged in pairs of staggered rows running along the length of the bushing 2 in a known manner, e. g. as shown in U. S. patents 4,337,075 and 6,196,029 (incorporated herein by reference). The perforated portion 6 of the perforated plate and flange 7 is spaced above the tip plate 10. The tip plate 10 is either a part of the sidewalls 4 or is welded, at the intersection 5 between the tip plate 10 and the end walls and the sidewalls 4 of the bushing 2. Internal supports 9 are welded to the top surface of the tip plate 10 to reduce sagging of the tip plate 10. The internal supports 9 have cutouts 11 above the orifices for the tips 12.

A plurality of cooling tubes 16, made from a nickel-titanium alloy according to the present invention, are spaced below the tip plate 10 and between double rows of tips 12. The cooling tubes 16 have an optional at least one fin 18 on top of the tubes 16 for cooling the tips 12, molten glass flowing from the tips 12 and fibers that are formed at the end of the tips 12 when the bushing 2 is operating. Some of the cooling tubes can have double fins 19 in a known manner such as tubes 20. A ceramic linear support 22 can lay on each tube 20 and extend to the bottom surface of the tip plate 10 in a known manner to provide support for the tip plate 10 in the manner disclosed in U.S. Patent No. 4,356,016 and 6, 196,029. Large bushings, having more than 1200 tips 12, use at least one of the double fin cooling tubes 20 and ceramic supports 22. The cooling tubes are supported in a well known manner, such as disclosed in U. S. patent No. 5,244,483, incorporated herein by reference.

A side view of the cooling tube 16 is shown in Figure 2. On this cooling tube 16, the fin 18 is in two parts with a gap 17 in the center portion of the cooling tube 16, but it can be continuous from one end to another. The cooling tubes 16 are hollow to allow any cooling fluid such as a gas or a liquid to pass through the tube. Water, such as plant process water, is typically used as the cooling fluid, but any cooling fluid including air can be used. The cooling tube 16 typically has an optional inlet tube 24 on one end and an optional outlet tube 26 on the other end, both having a round crossection for easy connection to flexible hoses to connect to the cooling fluid source and to carry away the exhaust cooling fluid to a return or drain system.

'While the cooling tubes 16 shown in Fig. 1 are rectangular, with or without radiused corners in cross-section, they can be oval, round or square, as shown in Figures 2A, 2B, 2C and 2D. As shown by Figure 2B, a second fin 23 can be mounted opposite the fin 18 on the cooling tube 16. Any crossectional shape is suitable for the cooling tubes of the present invention and they can have no fin 18, one, two or more than two fins.

In operation molten material like glass exits the tips 12 of the bushing 2 and forms a cone-shaped meniscus below each tip. A fiber is pulled away from each meniscus at a very high speed to form a fiber of desired diameter in a well known manner. It is necessary to cool the molten glass meniscus properly to prevent the fibers from breaking and to prevent the molten glass from spreading up the outside of the tips 12 and across the bottom of the tip plate 10 between the tips 12 when the fibers break, an event called flooding of the bushing. Flooding causes the bushing to be taken out of production for extended time while a hot, tedious job of de-flooding the bushing is undertaken.

The surface of the cooling tubes 16 and fins 18, because of their close proximity to the hot tip plate 10, typically over 1100 degrees C., and the hot molten glass, becomes quite hot. Further, these members are exposed to corrosive volatiles coming from the molten glass and to water vapor coming from hot fibers further below the bushing where the fibers are being further cooled by water sprays. These conditions are severe. In addition, because the tip plate 10 sags with time in operation, the cooling tubes 16 and fins 18 must be bent appropriately to maintain the important spacing between the fins 18 and the end of the tips 12. If that spacing is not maintained, the rate of fiber breaks per hour will increase dropping the fiberizing efficiency and the production rate and increasing the manufacturing cost. If the metal tube does not bend easily or quickly, in place, the operator or mechanic will not achieve the best spacing because of the uncomfortable conditions he must work in to do this, or he will damage the cooling member or bushing causing additional lost production and manufacturing costs. Only a few metals have proven suitable to provide the cooling function, the necessary malleability to allow for easy bending or the cooling member while it is in operation to compensate for tip plate sag (affects fiberizing efficiency or fiber breaks/hour) and reasonable cooling member tube life. Those few metals or alloys are all precious metals, or largely precious metals, requiring a substantial capital investment and a corresponding high cost.

In the present invention, at least one of the metal members for cooling, e.g. the cooling tubes 16 are made from nickel-titanium (Ni-Ti) alloys. The fins 18 can also be made from a NiTi alloy. These NiTi alloys preferably contain at least about 98 weight percent nickel plus titanium, more preferably at least about 99 weight percent. The NiTi alloys used in this invention can contain other materials in small or trace amounts, such as chromium and/or iron and/or nitrogen. Preferably, the nickel content of the alloy will be in the range of about 55-56 wt. percent. Regardless of the composition, these alloys used in the present invention remain in a martensite structure from room temperature to about 93,3°C (200 degrees F). Also, these alloys, if overheated and converted to a harder, more rigid austenite structure, quickly revert to the martensite structure when cooled back below about 93,3°C (200 degrees F). Preferably, the alloys used in this invention are sufficiently malleable to be bent easily to adjust the metallic cooling members as a tip plate or orifice plate of the bushing sags yet sufficiently rigid to avoid damage during routine operation and maintenance of the bushing. The cost of these alloys are far less than that of precious metal alloys currently being used and far superior to nickel or copper currently used in fin-shield type cooling members in one or more of the areas of malleabity, life, and resistance to corrosion..

Preferably, the alloys used in this invention are oxidation resistant up to about 427°C (800 degrees F). and form on the surface a thin oxide film that protects the alloy up to about 816°C (1500 degrees F). Preferably, the alloys used in this invention begin to deteriorate and spall above 816°C (1500 degrees F).

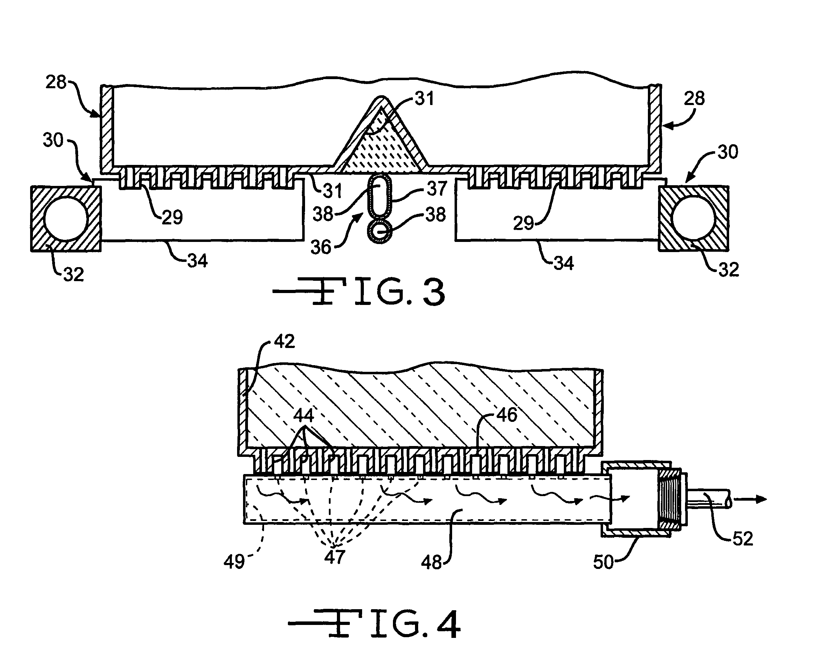

Figure 3 shows another well known fiberizing bushing 28, typically called a fin-shield bushing because of the fin-shield cooling assembly 30 mounted below the bushing 28. The fin shield assembly 30 comprises a cooling fluid manifold 32 and a plurality of fin shields 34. Each fin shield 34 is securely connected on one end to the cooling fluid manifold 32 and extends between rows of tips 29 on a tip plate 31 to remove heat from the tips 29, molten glass and fibers and conduct this heat to the manifold 32. The bushing 28 is partially supported by a combination cooling tube-air tube 36 that comprises a fluid cooling tube 37 and an air tube 38. A recess in a center portion of the tip plate 31 contains a refractory material 40 that insulates the tip plate 31 from the fluid cooling tube 37 electrically and thermally. More details of this bushing and its operation can be found in U. S. Patent No. 6,408,654, the disclosure incorporated herein by reference. The fin shields 34 are indirectly cooled by the cooling fluid while the manifold 32 is directly cooled by the cooling fluid.

The cooling assembly 30, the manifolds 32 and fin shields 34, or any part thereof, can be made from the nickel-titanium alloy according to the present invention. Because the manifolds 32 are spaced further from the hot tips 29 and the tip plate 31, it is within the scope of the present invention to use the nickel-titanium alloy only in the fin shields 34. The cooling tube-air tube 36 can also be made from the nickel-titanium alloy, or only the fluid cooling tube 37 or only the air tube 38.

Figure 4 is a partial crossection of a fiberizing bushing 42 having tips 44 on a tip plate 46. A plurality of hollow fins 48, each having a closed end 49 are connected on an opposite open end to a manifold 50, the latter having an exhaust tube 52. Each hollow fin 48 is located between rows of tips 44 and spaced below the ends of the tips 44 to cool the tips 44, molten glass emerging from the tips 44 and fibers formed from the molten glass. Each hollow fin 48 has a plurality of openings 47 in a top portion for drawing hot air into the hollow fin 48. Hot air is drawn through the openings 47 by maintaining a partial vacuum in the manifold 50 and hollow fin 48 by drawing off the hot air through exhaust tube 52. In this embodiment the cooling fluid is the air drawn into the hollow fin 48 which directly cools both the fins 48 and the exhaust manifold 50. More details on this cooling means, and similar cooling means, and their operation can be found in U.S. Patent No. 5,693,118, the disclosure of which is incorporated herein by reference. The hollow cooling fins 48 can be made from the nickel-titanium alloy according to the present invention. The manifold 50, or any part thereof, can also be made from the nickel-titanium alloy according to the present invention.

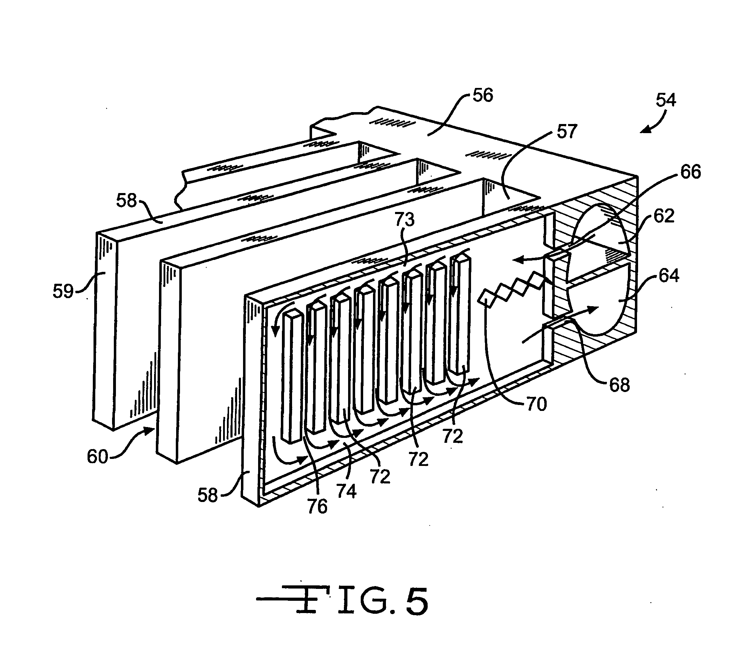

Figure 5 is a partial perspective view of another type of cooling assembly used below a fiberizing bushing to cool forming tips, molten material, and the fibers formed from the molten material. The cooling assembly 54 comprises a manifold 56 and a plurality of hollow cooling fins 58. The cooling fins 58 are parallel to each other and separated by a space 60 to permit room for bushing tips and/or molten glass and fiber formation. Each fin 58 is attached on one end to a manifold 57 and is closed on the opposite end 59. The manifold 56 has two chambers, an intake chamber 62 and an exhaust chamber 64. The intake chamber 62 communicates with the interior of the hollow fins 58 through openings 66 and the interior of each cooling fin 58 also communicates with the exhaust chamber 64 through openings 68.

On the interior of each hollow fin 58 are a generally horizontal barrier 70, extending from the manifold wall 57 only a small part of the length of the fin 58, and a plurality of generally vertical, spaced apart separators 72 whose ends are spaced from the top and bottom walls of the fin 58 to form an upper cooling channel 73 and a lower cooling channel 74. The generally vertical separators 72 cause cooling fluid coming from the intake chamber 62 to distribute evenly across the hollow fin 58 and to flow downwardly through generally vertical channels 76 formed by the spaces between the generally vertical separators 72. The generally horizontal barrier 70 can extend to the separator 72 closest to the manifold wall 57, but usually stops a short distance from that separator 70 to allow some cooling fluid to pass between the end of the barrier 70 and that separator 72. The purpose of the barrier 70 is to prevent short circuiting of the cooling fluid and to cooperate with the separators 72 to cause the cooling fluid to be more uniformly distributed over the interior surfaces of the cooling fin 58, directly cooling the hollow fins 58. More details of this cooling assembly 54 and how it is operated in the manufacture of fibers from molten material, and other similar cooling assemblies can be found in U.S. Patent No. 6,192,714, the disclosure being incorporated herein by reference. This entire cooling assembly, or any part thereof, can be made using a nickel-titanium alloy according to the present invention.

As shown above, the present invention is applicable to cooling apparatus known in the art as cooling tubes and fin shield cooling. Fin shield cooling includes any solid or hollow fin, like element 34 in Fig. 3, element 48 in Fig. 4 and element 58 in Fig. 5, that connects to a cooling manifold on one or both ends of the fin, or along a small percentage of its length, of instead of along most of or the entire length of the fin as on a cooling tube as shown in Figs. 2 and 2A-D.

Several types of fiberizing bushing cooling apparatus have been shown in detail above, but there are many variations of these and very possibly other metal cooling apparatus that are similarly positioned near a fiberizing bushing. The present invention as described by the following claims is also applicable to those fiberizing bushing cooling means and variations thereof.

## Claims

1. A cooling apparatus mounted close to a fiberizing bushing comprising a metal member for cooling one or more items selected from a group consisting of tips of the fiberizing bushing, molten material flowing out of the tips, and fibers formed from the molten material, the metal member comprising an alloy of nickel and titanium, the alloy being in a martensite phase below about 93,3°C (200 degrees F).

2. The cooling apparatus of claim 1 wherein the nickel plus titanium content of the alloy amount to at least about 98 weight percent.

3. The cooling apparatus of claim 1 or 2 wherein the nickel content of the alloy is in the range of about 55 to about 56 weight percent.

4. The cooling apparatus according to one of the claims 1 to 3 comprising a cooling tube.

5. The cooling apparatus according to one of the claims 1 to 4 comprising a fin.

6. The cooling apparatus according to one of the claims 1 to 5 wherein the cooling tube comprises at least one fin.

7. The cooling apparatus according to at least one of the claims 1 to 6 comprising a fin shield.

8. The cooling apparatus according to one of the claims 1 to 7 comprising a manifold for a cooling fluid.

9. The cooling apparatus according to one of the claims 1 to 8 comprising a fluid cooled bushing support.

10. A method of forming fibers from a molten material by feeding the molten material to a heated fiberizing bushing having a cooling apparatus mounted close to a fiberizing bushing, the cooling apparatus comprising a metal member for cooling one or more items selected from a group consisting of tips of the fiberizing bushing, molten material flowing out of the tips, and fibers formed from the molten material, the metal member comprising an alloy of nickel and titanium, the alloy being in a martensite phase below about 93,3°C (200 degrees F)., causing the molten material to flow through nozzle tips on the bottom of the bushing to form fibers and pulling the fibers away from the tips.

11. The method of claim 10 wherein the nickel plus titanium content of the alloy amount to at least about 98 weight percent.

12. The method of claim 10 or 11 wherein the nickel content of the alloy is in the range of about 55 to about 56 weight percent.

13. The method according to one of the claims 10 to 12 wherein the metal member comprises a cooling tube.

14. The method according to one of the claims 10 to 13 wherein the metal member comprises a fin.

15. The method of claim 13 wherein the cooling tube comprises at least one fin.

16. The method of according to one of the claims 10 to 15 wherein the metal member comprises a fin shield.

17. The method according to one of the claims 10 to 16 wherein the metal member comprises a manifold.

18. The method according to one of the claims 10 to 17 wherein the metal member comprises a fluid cooled support for the fiberizing bushing.
